# EUROPEAN PATENT APPLICATION

(11) **EP 4 303 471 A1**
(43) Date of publication of application: **10.01.2024**
(21) Application number: 23170951.0
(22) Date of filing: 02.05.2023
(51) Int. Cl.: F16J 15/3208, F16J 15/3296

(54) **SYSTEM AND METHOD FOR MEASURING CONDITION OF RADIAL LIP SEAL ARRANGED CIRCUMFERENTIALLY OVER ROTATABLE AXLE**

(30) Priority: 06.07.2022 FI 20225632
(71) Applicant: Steerprop Oy, 26101 Rauma (FI)
(72) Inventor: Sirrola, Jarkko, 26200 Rauma (FI)
(74) Representative: Moosedog Oy

(57) **Abstract**

Disclosed is a system for measuring wear of at least one radial lip seal (102, 204) arranged circumferentially over a rotatable axle (104, 214), the system comprising the at least one radial lip seal having an inner diameter (106, 206), an outer diameter (108, 208) and a sensor arrangement (114, 202), attached at least partly inside a seal-box (116), arranged proximally to the at least one radial lip seal, and the sensor arrangement is configured to measure the wear of the at least one radial lip seal, by measuring with a sensor (118) of the sensor arrangement the distance between the sensor and the at least one radial lip seal, wherein the wear of the at least one radial lip seal corresponds to the distance of the at least one radial lip seal from the sensor (118), wherein the distance is measured between the sensor (118) and the outer diameter (108, 208) of the at least one radial lip seal (102, 204), wherein the sensor arrangement is configured for dynamic measuring of the at least one radial lip seal and static measuring of the at least one radial lip seal and to predict the replacement of the at least one radial lip seal, wherein static measuring refers to the measurement performed by the sensor arrangement when the rotatable axle is stationary and dynamic measuring refers to the measurement performed by the sensor arrangement when the rotatable axle is rotating, and wherein the sensor arrangement (114, 202) is further configured to measure at least one of: liner eccentricity, liner deformation, liner temperature, axle eccentricity, axle deformation, axle temperature, configuration of the axle, radial wear in axle bearings. Disclosed is also a method.

## Description

### TECHNICAL FIELD

The present disclosure relates to system for measuring the condition like wear of at least one radial lip seal arranged circumferentially over a rotatable axle. The present disclosure also relates to method for measuring wear of at least one radial lip seal arranged circumferentially over a rotatable axle. The present disclosure also relates to azimuth type thruster of a marine vessel.

### BACKGROUND

Seals serve as an integral element for an effective and reliable operation of a rotary shaft of an equipment (such as a vehicle). Generally, seals are widely used in equipment useable in wet environments. Such wet environment equipment may include for example propulsion systems of marine vessels (such as a ship), water pumps, turbines, and so forth. Notably, seals keep the oil or grease lubricant inside the equipment and prevent the ingress of water and dirt therein. In this regard, designs and configurations of seals can vary significantly, generally, a seal is characterised by a pair of seal faces, one of which is connected to the rotary shaft, and the other is connected to a stationary casing, such as a housing of the equipment. Thus, the seals are configured to provide an interface between the static and rotary portions of the equipment.

However, during operation, the seals undergo a wear and/or deformation due to the rotation of the rotary shaft against the seals. Such deformation may result in water to penetrate through the seal, thereby costing the entire equipment, especially the whole drive, engines and electronics, for example. Therefore, it is important to monitor the status or condition of the seals.

Conventionally, a manual inspection is to be performed to monitor the condition of the seals. However, such manual inspection may not be very efficient and reliable, and are complex for equipment with a plurality of seals arranged therein. Alternatively, a probe is conventionally used to monitor the condition of the seal. Typically, the probe measure the distance of a radial surface of the seal from a fixed point. However, because of dimensional constraints, particularly with smaller diameter seals, this method is not always convenient. Furthermore, the seals may be replaced after every five years, but that still does not guarantee the efficient working of the seals during that time.

Therefore, in light of the foregoing discussion, there exists a need to overcome the aforementioned drawbacks associated with the conventional monitoring of the seals.

### SUMMARY

The present disclosure seeks to provide a system for measuring wear of at least one radial lip seal arranged circumferentially over a rotatable axle. The present disclosure also seeks to provide a method for measuring wear of at least one radial lip seal arranged circumferentially over a rotatable axle. An aim of the present disclosure is to provide a solution that overcomes at least partially the problems encountered in prior art.

In a first aspect, an embodiment of the present disclosure provides a system for measuring wear of at least one radial lip seal arranged circumferentially over a rotatable axle, the system comprising:
- the at least one radial lip seal having an inner diameter, an outer diameter, and
- a sensor arrangement, attached at least partly inside a seal-box, arranged proximally to the at least one radial lip seal, and the sensor arrangement is configured to measure the wear of the at least one radial lip seal, by measuring with a sensor of the sensor arrangement the distance between the sensor and the at least one radial lip seal, wherein the wear of the at least one radial lip seal corresponds to the distance of the at least one radial lip seal from the sensor, wherein the distance is measured between the sensor and the outer diameter of the at least one radial lip seal,
   wherein the sensor arrangement is configured for dynamic measuring of the at least one radial lip seal and static measuring of the at least one radial lip seal and to predict the replacement of the at least one radial lip seal, wherein static measuring refers to the measurement performed by the sensor arrangement when the rotatable axle is stationary and dynamic measuring refers to the measurement performed by the sensor arrangement when the rotatable axle is rotating, and
   wherein the sensor arrangement is further configured to measure at least one of: liner eccentricity, liner deformation, liner temperature, axle eccentricity, axle deformation, axle temperature, configuration of the axle, radial wear in axle bearings.

In a second aspect, an embodiment of the present disclosure provides a method for measuring wear of at least one radial lip seal arranged circumferentially over a rotatable axle, the at least one radial lip seal having an inner diameter and an outer diameter, the method comprising:
- arranging a sensor arrangement at least partly inside a seal-box, proximally to the at least one radial lip seal, and the sensor arrangement configured to measure wear of the at least one radial lip seal;
- measuring, using the sensor arrangement, the wear of the at least one radial lip seal corresponding to a distance of the at least one radial lip seal from the sensor arrangement, wherein the distance is measured between the sensor and the outer diameter of the at least one radial lip seal,
   wherein the sensor arrangement configured for dynamic measuring of the at least one radial lip seal and static measuring of the at least one radial lip seal and predicting the replacement of the at least one radial lip seal, wherein static measuring refers to the measurement performed by the sensor arrangement when the rotatable axle is stationary and dynamic measuring refers to the measurement performed by the sensor arrangement when the rotatable axle is rotating,
   wherein the sensor arrangement configured for measuring at least one of: liner eccentricity, liner deformation, liner temperature, axle eccentricity, axle deformation, axle temperature, configuration of the axle, radial wear in axle bearings; and
- sending a measurement data, corresponding to the distance of the at least one radial lip seal, to a processor.

In a third aspect, an embodiment of the present disclosure provides an azimuth type thruster of a marine vessel, the azimuth type thruster comprising at least one housing configured to hold:
- at least one rotatable axle having at least one radial lip seal according to the first aspect, wherein the at least one radial lip seal is arranged circumferentially over the at least one rotatable axle; and
- a sensor arrangement, attached at least partly inside a seal-box, arranged proximally to the at least one radial lip seal, and the sensor arrangement is configured to measure wear of the at least one radial lip seal.

Embodiments of the present disclosure substantially eliminate or at least partially address the aforementioned problems in the prior art, and provide a system and method for measuring the wear of at least one radial lip seal, especially radial lip seal in propulsion systems (electrical or mechanical, having gear or not) of marine vessels like ships. Typically, the measuring is done using the sensor arrangement arranged in distance to the at least one radial lip seal arranged circumferentially over a rotatable axle. The sensor arrangement is designed to be an energy-efficient, a practical and easy-to-install unit within the marine vessel. The monitoring enables the user to measure the dynamic and static conditions of the at least one radial lip seal and also predict when the at least one radial lip seal needed to be changed. Moreover, the sensor arrangement also provides information about the condition of the rotatable axle or the liner contacting the at least one radial lip seal. Furthermore, the sensor arrangement also measures the conditions of the rotatable axle, such as eccentricity thereof, and so on.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
- FIG. 1 is: a cross-sectional view of installation of a sensor arrangement, in accordance with an embodiment of the present disclosure;
- FIG. 2 is: a cross-sectional view of a system for measuring wear of at least one radial lip seal, in accordance with an embodiment of the present disclosure; and
- FIG. 3 is: a flowchart depicting steps of measuring wear of at least one radial lip seal, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system for measuring wear of at least one radial lip seal arranged circumferentially over a rotatable axle, the system comprising:
- the at least one radial lip seal having an inner diameter, an outer diameter, and
- a sensor arrangement, attached at least partly inside a seal-box, arranged proximally to the at least one radial lip seal, and the sensor arrangement is configured to measure the wear of the at least one radial lip seal, by measuring with a sensor of the sensor arrangement the distance between the sensor and the at least one radial lip seal, wherein the wear of the at least one radial lip seal corresponds to a distance of the at least one radial lip seal from the sensor, wherein the distance is measured between the sensor and the outer diameter of the at least one radial lip seal,
   wherein the sensor arrangement is configured for dynamic measuring of the at least one radial lip seal and static measuring of the at least one radial lip seal and to predict the replacement of the at least one radial lip seal, wherein static measuring refers to the measurement performed by the sensor arrangement when the rotatable axle is stationary and dynamic measuring refers to the measurement performed by the sensor arrangement when the rotatable axle is rotating, and
   wherein the sensor arrangement is further configured to measure at least one of: liner eccentricity, liner deformation, liner temperature, axle eccentricity, axle deformation, axle temperature, configuration of the axle, radial wear in axle bearings.

In a second aspect, an embodiment of the present disclosure provides a method for measuring wear of at least one radial lip seal arranged circumferentially over a rotatable axle, the at least one radial lip seal having an inner diameter and an outer diameter, the method comprising:
- arranging a sensor arrangement at least partly inside a seal-box, proximally to the at least one radial lip seal, and the sensor arrangement configured to measure wear of the at least one radial lip seal;
- measuring, using the sensor arrangement, the wear of the at least one radial lip seal corresponding to a distance of the at least one radial lip seal from the sensor arrangement, wherein the distance is measured between the sensor (118) and the outer diameter (108, 208) of the at least one radial lip seal (102, 204),
   wherein the sensor arrangement configured for dynamic measuring of the at least one radial lip seal and static measuring of the at least one radial lip seal and predicting the replacement of the at least one radial lip seal, wherein static measuring refers to the measurement performed by the sensor arrangement when the rotatable axle is stationary and dynamic measuring refers to the measurement performed by the sensor arrangement when the rotatable axle is rotating,
   wherein the sensor arrangement (114, 202) configured for measuring at least one of: liner eccentricity, liner deformation, liner temperature, axle eccentricity, axle deformation, axle temperature, configuration of the axle, radial wear in axle bearings; and
- sending a measurement data, corresponding to the distance of the at least one radial lip seal, to a processor.

In a third aspect, an embodiment of the present disclosure provides an azimuth type thruster of a marine vessel, the azimuth type thruster comprising at least one housing configured to hold:
- at least one rotatable axle having at least one radial lip seal according to the first aspect, wherein the at least one radial lip seal is arranged circumferentially over the at least one rotatable axle; and
- a sensor arrangement, attached at least partly inside a seal-box, arranged proximally to the at least one radial lip seal, and the sensor arrangement is configured to measure wear of the at least one radial lip seal.

The present disclosure provides the aforementioned system and the aforementioned method for measuring the wear of the at least one radial lip seal arranged circumferentially over the rotatable axle. The at least one radial lip seal prevents the ingress of water, dirt and other contaminants inside the equipment. However, in the process the blocked water, dirt and other contaminants as well as the moving rotatable axle may degrade the quality of the at least one radial lip seal and result in a wear thereof. Therefore, the aforementioned system and the aforementioned method employ the sensor arrangement arranged in distance to the at least one radial lip seal to measure the wear and life remaining of the at least one radial lip seal. Beneficially, the sensor arrangement is configured to detect and analyze the condition of the the liner or the rotatable axle contacting the at least one radial lip seal and provides such measurements to the user for maintenance or replacement thereof.

Throughout the present disclosure, the term *"measuring"* as used herein refers to a regular observation (namely monitoring) and recording of a change in structure, such change in the structure may be a change in shape and size of the at least one radial lip seal, to ensure quality of the measured article, such as the at least one radial lip seal and/or the liner or the rotatable axle contacting the at least one radial lip seal. The at least one radial lip seal is monitored when the at least one radial lip seal is arranged around the rotatable axle and the rotatable axle is stationary or rotating.

The term *"rotatable axle"* as used herein refers to an elongate element having a proximal end operatively coupled with an engine (such as that of a marine propulsion system) and a distal end operatively coupled with a load (such as a propellor or impeller of the marine propulsion system) to deliver power from the proximal end (i.e. power source) to the distal end (power absorbing component). having other intermediary components therebetween. Moreover, the rotatable axle is configured to accommodate the at least one radial lip seal arranged circumferentially thereon.

Optionally, the rotatable axle may further comprise a liner arranged thereon. The term *"liner"* as used herein refers to a protective layer arranged around the rotatable axle to protect the rotatable axle against wear or potential damage from the external factors (such as moisture, chemicals, pressure, and so forth). It will be appreciated that the layer of the liner may be fabricated of chrome steel, tungsten, cast iron, ceramic, hard metal, composite material, and the like. In addition, the liner is fabricated such that it wears slowly, and may last for the whole life of the rotatable axle. Optionally, the liner may have a nanocoating to repel dry particles, water, oil, dirt and the like to prevent ingress therefrom.

The term *"at least one radial lip seal"* as used herein refers to radial type seals used to seal rotatory elements (such as the rotatable axle) to prevent the ingress of water and dirt inside the main equipment attached therewith. It will be appreciated that the rotatable axle may comprise a plurality of radial lip seals arranged circumferentially thereon. Optionally, the number of radial lip seal arranged circumferentially over the rotatable axle may depend on a length of the rotatable axle, a number of power sources and a number of power absorbing components associated with the rotatable axle, and so on. Optionally, the at least one radial lip seal is fabricated from a material selected from at least one of a rubber, a plastic, a silicone, a composite material. In this regard, the fabricated material of the at least one radial lip seal is usually high temperature resistant and is compatible with water, mineral oils and greases.

Moreover, the at least one radial lip seal has the inner diameter and the outer diameter. Herein, the term *"inner diameter"* as used herein refers to a distance of a straight line from one point on an inner wall of the at least one radial lip seal, through its centre, to an opposite point also on the inside of the at least one radial lip seal and the term *"outer diameter"* as used herein refers to a distance of a straight line from one point on as outer wall of the at least one radial lip seal, through its centre, to an opposite point also on the outside of the at least one radial lip seal. In other words, the inner diameter and the outer diameter are the diameters of an inner wall and an outer wall of the at least one radial lip seal, respectively.

Optionally, the at least one radial lip seal is arranged such that the inner diameter is arranged to contact the rotatable axle or the liner. It will be appreciated that the at least one radial lip seal contacts the rotatable axle or the liner from the inner wall of the at least one radial lip seal. Typically, the at least one radial seal forms two angles at a point of contact with the rotatable axle or the liner. Notably, the said angles are formed at the oil side and at the air and/or water side. Optionally, the air and/or water side angle is usually less than the oil side angle. Additionally, the said angles are varied to create a pressure distribution at the at least one radial lip seal contact point with the rotatable axle or the liner.

Optionally, the system further comprises a means fitted circumferentially over the at least one radial lip seal for tightening the at least one radial lip seal against the rotatable axle or a liner fitted around the circumference over the rotatable axle. The term *"means"* as used herein refers to a tightening means configured to provide a consistent load throughout the circumference of the at least one radial lip seal. Moreover, the means arranged circumferentially around the at least one radial lip seal such that to force the inner diameter of the at least one radial lip seal to be in continuous contact with the rotatable axle or the liner. Beneficially, the means are configured to provide the consistent load to create a leak-tight seal.

Optionally, the means for tightening the at least one radial lip seal against the rotatable axle or the liner is a spring. Typically, the spring is used in tension for maintaining a radial sealing force between the at least one radial lip seal and the rotatable axle or the liner. Moreover, the spring keeps the at least one radial lip in contact with the rotatable axle or the liner during higher speeds and also helps maintain offset normally occurring due to compression and wear of the at least one radial lip seal. The spring may include, but is not limited to garter spring, cantilever spring, v spring, helical-wound spring, canted-coil spring. Optionally, the spring is a coiled spring having both ends thereof connected to each other such that the spring creates a circular shape. Optionally, the spring is fabricated from stainless steel, Hastelloy, Elgiloy and the like. Beneficially, the spring is capable of handling variations in temperature and fluids (such as water, grease, mineral oil, etc).

The term *"sensor arrangement"* as used herein refers to an arrangement having one or more sensors therein, configured to measure wear, such as a reduction of diameter, of the at least one radial lip seal arranged circumferentially over a rotatable axle or the liner. In this regard, the sensor arrangement is arranged proximally to the at least one radial lip seal. Moreover, the sensor arrangement is arranged with the seal box formed into the body part of the equipment associated with the rotatable axle having the at least one radial lip seal arranged circumferentially thereover. The term *"seal box"* as used herein refers to the chamber arranged in distance to the at least one radial lip seal ideally configured to hold oil.

Optionally, the seal box may have a pressurized oil and/or a pressure sensor therein. Notably, the at least one radial lip seal acts as a barrier to retain the oil, and to prevent dirt and other contaminants from entering the equipment. Moreover, the inner diameter of the at least one radial lip seal generally has a small contact area on the rotatable axle or the liner. The at least one radial lip seal works due to a hydrodynamic lubricating film formed by oil between the at least one radial lip seal and the rotatable axle or the liner creating an area called the sealing gap, where the hydrodynamic lubricating film has a thickness in a range of a few microns. The pressurized oil has a pressure higher as compared to a pressure of the water on the at least one radial lip seal, thereby, creating overpressure in the at least one radial lip seal and pressing it tightly against the liner, preventing water from reaching. Beneficially, the hydrodynamic lubrication film forms a barrier between two media, such as water and oil. Moreover, the hydrodynamic lubrication film is formed such that the at least one radial lip seal and the rotatable axle or the liner do not make contact. Thus, resulting in less friction, therefore a reduction in energy consumption, less wear, longer lifetime and minimal heat development. In addition, the minimal heat development enables the at least one radial lip seals suitable for high-speed applications of the system. It will be appreciated that the pressure sensor is configured to measure the pressure within the seal box.

Optionally, the sensor arrangement may comprise a battery in order to perform the measurement of the wear of the at least one radial lip seal when there is a power available. Optionally, the sensor arrangement may be installed in a body part of the equipment through a hole therein, and arranging the sensor arrangement at least partly inside a seal-box using screw nut mechanism, snap fit mechanism and the like, to hold the sensor arrangement firmly. Moreover, the sensor arrangement may be installed orthogonal to the at least one radial lip seal or an angle between 10 to 90 degrees. Optionally, the sensor arrangement may be installed at an angle of 0 to 120 degrees. The angle may be from 0, 10, 20, 30 ,40 ,50, 60 ,70, 80, 90, 100 or 110 degrees up to 10, 20, 30 ,40 ,50, 60 ,70, 80, 90, 100, 110 or 120 degrees. Beneficially the sensor is arranged in proximity of the at least one radial lip seal.

The distance is measured between the sensor and the outer diameter of the at least one radial lip seal. In this regard, the wear of the at least one radial lip seal corresponds to a change of distance between the outer diameter of least one radial lip seal and the sensor arrangement and wherein the sensor arrangement is capable of measuring distance by a sensor. Optionally, the sensor arrangement employs the sensor to measure the change in distance of the means for tightening the at least one radial lip seal against the rotatable axle or a liner. It can also be optionally, that the distance from the sensor to the means of tightening (like a spring) is measured. It will be appreciated that the change in distance of the at least one radial lip seal from the sensor results from the wear of the at least one radial lip seal due at least one of: a continuous friction from the the rotatable axle or the liner and/or the environmental conditions to which the at least one radial lip seal is exposed to.

Optionally, the sensor is selected from group of: an eddy current sensor, photoelectric proximity sensor, magnetic proximity sensor, ultrasonic sensor, IR proximity sensor and the like. It will be appreciated that the other sensors suitable for measuring distance may also be used to measure the change of distance between the sensor arrangement and the outer diameter of the at least one radial lip seal. In this regard, the sensor is configured to measure the change in size and width of the at least one radial lip seal. For example, the sensor arrangement may have the eddy current sensor and a sensor head, the sensor head having a coil inside therein. The coil generates a high-frequency magnetic field by flowing a high-frequency current to the sensor head. During measuring, when the means comes close to the magnetic field, an eddy current is generated on the surface thereof and that causes a change in the impedance of the coil, which is proportional to the change in the distance of the means.

The sensor arrangement is further configured to measure at least one of: liner eccentricity, liner deformation, liner temperature, axle eccentricity, axle deformation, axle temperature, configuration of the axle, radial wear in axle bearings. The term *"liner eccentricity"* as used herein refers to state when the centre of the liner does not coincide with the center to the rotatable axle. The term *"axle eccentricity"* as used herein refers to state when the rotatable axle rotates offset to its central axis. In this regard, the sensor arrangement is configured to measure the change in the liner eccentricity and the axle eccentricity in order to minimise such eccentricity. Moreover, the sensor arrangement is configured to measure the liner deformation and the axle deformation. The deformation may lead to degradation of the at least one radial lip seal. Furthermore, the sensor arrangement is configured to measure indirect measurements, such as the temperature of the rotatable axle and the liner in order to maintain optimum temperature therein. The said indirect measurement are taken in order to reduce the wear of the at least one radial lip seal. In addition, the sensor arrangement is configured to measure the configuration of the axle and the radial wear in axle bearings.

It will be appreciated that the sensor also detects the change in the condition of the at least one radial lip seal and/or at least one of: liner eccentricity, liner deformation, liner temperature, axle eccentricity, axle deformation, axle temperature, configuration of the axle, radial wear in axle bearings, and record such data. Optionally, the sensor sends such recorded data (namely, sensor data) for further analysis or action by the user. Optionally, the sensor data may be uploaded to a cloud server or a computing unit associated with the user over a communication interface. Herein, the term *"communication interface"* refers to a means of communication that is used to communicate the indicator value to the computing unit. Optionally, the communication interface may be a wired or a wireless communication unit. Optionally, the communication interface may include, but is not limited to, Bluetooth^{®}, Wireless Fidelity (Wi-Fi), Local Area Networks (LANs), Wide Area Networks (WANs), Metropolitan Area Networks (MANs), Wireless LANs (WLANs), Wireless WANs (WWANs), Wireless MANs (WMANs), the Internet, second generation (2G) telecommunication networks, third generation (3G) telecommunication networks, fourth generation (4G) telecommunication networks, fifth generation (5G) telecommunication networks and Worldwide Interoperability for Microwave Access (WiMAx) networks. Herein, the term *"computing unit"* refers to a unit having processing capabilities. Optionally, the computing unit may be a cloud server, a database or a processor. The reader part may transfer the information received from the at least one sensor to the computing device for further processing and analysis of the information. Optionally, the computing unit may include, but is not limited to, cellular phones, personal digital assistants (PDAs), handheld devices, wireless modems, laptop computers, personal computers, and so forth.

The present disclosure also relates to the method as described above. Various embodiments and variants disclosed above apply mutatis mutandis to the method.

The term *"measurement data"* as used herein refers to the sensor data obtained by tracking and recording continuously information about the wear of the at least one radial lip seal and/or at least one of: liner eccentricity, liner deformation, liner temperature, axle eccentricity, axle deformation, axle temperature, configuration of the axle, radial wear in axle bearings, and updating the said information to the processor associated with the computing unit or the cloud server. The term *"processor"* as used herein refers to a computational element that is operable to respond to and processes measurement data given by the sensor arrangement that drives the system comprising the I/O interface. The processor includes but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the processor may refer to one or more individual processors, processing devices and various elements associated with a processing device that may be shared by other processing devices. Moreover, the measurement data may be accessed and used by the user to monitor the at least one lip seal and/or at least one of: liner eccentricity, liner deformation, liner temperature, axle eccentricity, axle deformation, axle temperature, configuration of the axle, radial wear in axle bearings remotely, and provide instructions corresponding to the subject condition thereof in order to prevent an emergency situation. Notably, the measurement data of the subject can be accessed wirelessly via Internet (such as Wi-Fi, LAN, and the like).

Optionally, a cloud server or the processor of the computing unit may be used for storing, managing, processing and making available for accessing the measurement data to the user. Optionally, an Artificial Intelligence (AI) may also be integrated with the processor to predict the wear of the at least one radial lip seal and/or at least one of: liner eccentricity, liner deformation, liner temperature, axle eccentricity, axle deformation, axle temperature, configuration of the axle, radial wear in axle bearings from measurement data.

Optionally, the method further comprising a means fitted circumferentially over the at least one radial lip seal, for tightening the at least one radial lip seal against the rotatable axle or a liner fitted around the circumference over the rotatable axle.

Optionally, the tightening of the at least one radial lip seal against the rotatable axle or the liner is a performed by a spring.

The sensor arrangement configured for measuring at least one of: liner eccentricity, liner deformation, liner temperature, axle eccentricity, axle deformation, axle temperature, configuration of the axle, radial wear in axle bearings.

The method further comprising performing, using the sensor arrangement, a static measuring of the at least one radial lip seal and/or a dynamic measuring of the at least one radial lip seal. The term *"static measuring"* as used herein refers to the measurement performed by the sensor arrangement when the rotatable axle is stationary. The term *"dynamic measuring"* as used herein refers to the measurement performed by the sensor arrangement when the rotatable axle is rotating. Notably, such measurement enables the user to identify the working measurement of the at least one radial lip seal. For example, measurement can be taken after some when the rotatable axle has started to rotate for about 5 minutes to 5 days to measure the working temperature of the at least one radial lip seal. Another example can be taking a first measurement for a first distance during a period of time and a second measurement for a second distance during a period of time. Furthermore, the first measurement is compared with the second measurement to analyse the wear of the at least one radial lip seal during each first and second measurement, and the variation of temperature of the at least one radial lip seal.

Optionally, the method further comprising calibrating the sensor arrangement when at least one radial lip seal is in use. The term *"calibrating"* as used herein refers to the comparison of measurement values delivered by the sensor arrangement under test with respect to the standard values of the sensor arrangement. Typically, the sensor arrangement is calibrated to function precisely and eliminate the error in the sensor. In this regard, the error can be caused by the electric field generated by currents and/or by the overrun of the sensor arrangement and/or due to fault element therein, which interference with the readings of the sensor arrangement.

Optionally, the method further comprising compensation of the measurement data based on at least one of: temperature, pressure. In this regard, compensation of the measurement data corresponds to a change in dimensions of the liner and the at least one radial lip seal due to changes in temperature and/or pressure. Typically, when the rotatable axle starts to rotate, the pressure is applied to the seal box, the liner and at least one radial lip seal changes their dimensions (in a small range) and hence the compensation is achieved. For example, when the rotatable axle starts to rotate, it will take up to 10-20 minutes for the temperature to reach a stable value, once the temperature is stable, then it will not affect the measurement in a normal use case. However, during the change or rise in temperature of the liner, the at least one radial lip seal undergoes into the change in dimension, such a change in dimension is needed to compensate to obtain accurate measuring data. Furthermore, the said change in dimension may arise due to thermal expansion values of the liner and the at least one radial lip seal.

Optionally, the method comprises arranging the at least one radial lip seal such that the inner diameter contacts the rotatable axle or the liner.

Optionally, the seal box has a pressurized oil and/or a pressure sensor therein.

The present disclosure also relates to the azimuth type thruster of a marine vessel as described above. Various embodiments and variants disclosed above apply mutatis mutandis to the azimuth type thruster of a marine vessel.

It will be appreciated that the term *"at least one rotatable axle"* is only used in plural corresponding to the aforementioned rotatable axle of the first aspect.

The term *"azimuth type thruster"* as used herein refers to the type of propellers of the marine vessel mounted within a pod of the marine vessel that is configured to provide thrust and steering by rotating the pod) in a horizontal angle (referred to as azimuth). Typically, in the azimuth thruster, the propeller rotates 360° around the vertical axis to provide propulsion, steering and positioning thrust for greater manoeuvrability with the ability to move the marine vessel in any direction. The term *"at least one housing"* as used herein refers to one or more housing configured to hold the at least one rotatable axle therein. Optionally, marine vessels may include but not limited to steam turbine propulsion, diesel propulsion, gas turbine propulsion, nuclear propulsion, fuel cell propulsion, shaft line systems.

Optionally, the at least one rotatable axle has a first, a second, a third and a fourth radial lip seal arranged circumferentially thereon, and wherein the sensor arrangement is configured to measure the wear of the third radial lip seal when counted from that end of the at least one rotatable axle where a propeller is attached. Herein, the sensor arrangement is configured to measure the wear of the third radial lip seal counted from the propellor end. Typically, the third radial lip seal is configured to hold the oil from the one side and prevent ingress of water from the other side. In this regard, the third radial lip seal is the critical and required to be monitored for smooth operation. Alternatively, optionally, the sensor arrangement may be configured to measure the wear of the first, second and fourth radial lip seals. In this regard, the marine vessel may have two sensor arrangements arranged to measure the wear of the first radial lip seal and third radial lip seal using a specific sensor arrangement from amongst the two sensor arrangements.

### DETAILED DESCRIPTION OF THE DRAWINGS

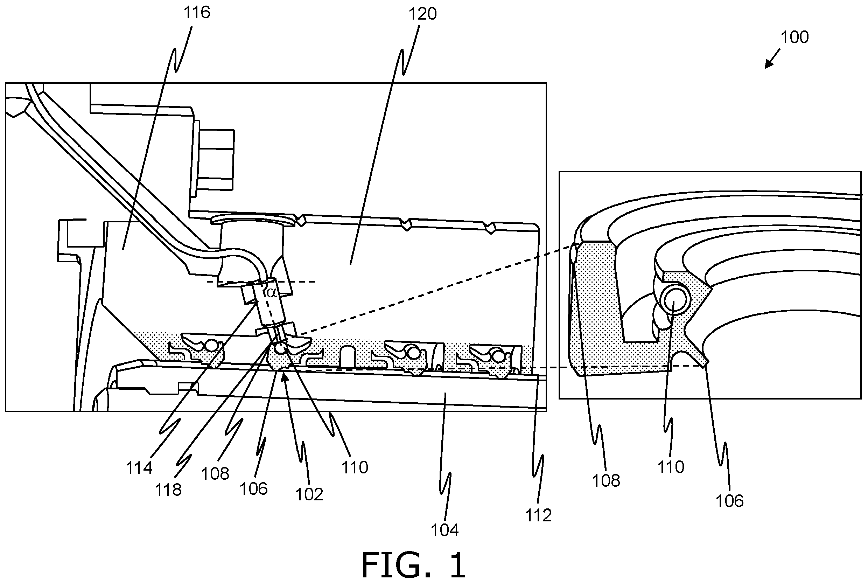

Referring to FIG. 1, illustrated is a cross-sectional view of a system **100** for measuring wear of at least one radial lip seal **102** arranged circumferentially over a rotatable axle **104,** in accordance with an embodiment of the present disclosure. Notably, the at least one radial lip seal **102** has an inner diameter **106** and an outer diameter **108.** The system **100** also comprises a means **110** fitted circumferentially over the at least one radial lip seal **102,** for tightening the at least one radial lip seal **102** against the rotatable axle **104** or a liner **112** fitted around the circumference over the rotatable axle **104;** and a sensor arrangement **114,** attached at least partly inside a seal-box **116,** arranged proximally to the at least one radial lip seal **102,** and the sensor arrangement **114** is configured to measure the wear of the at least one radial lip seal **102** by measuring with a sensor **118** of the sensor arrangement **114** the distance between the sensor **118** and the at least one radial lip seal **102.** In this regard, the wear of the at least one radial lip seal **102** corresponds to a distance of the at least one radial lip seal **102** from the sensor **118.** Moreover, the at least one radial lip seal **102** is arranged such that the inner diameter **106** is arranged to contact the liner **112.** As shown, the sensor arrangement **114** is installed in a body part **120** through a hole at an angle α therein, wherein the angle ranges between 10 to 120 degrees and attached at least partly inside the seal-box **116,** using screw nut mechanism.

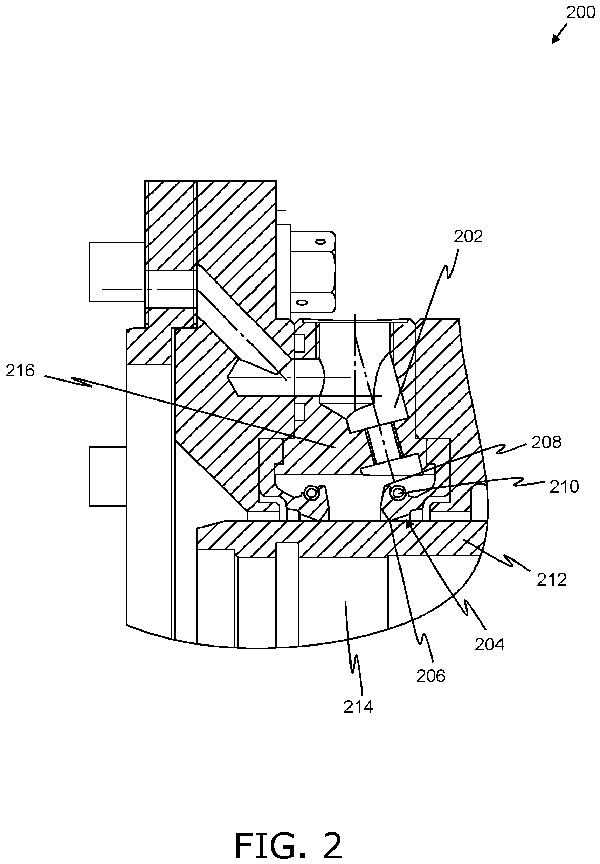

Referring to FIG. 2, illustrated is a cross-sectional view of installation **200** of a sensor arrangement **202,** in accordance with an embodiment of the present disclosure. As shown, at least one radial lip seal **204** has an inner diameter **206,** an outer diameter **208,** and a means **210** fitted circumferentially over the at least one radial lip seal **204,** for tightening the at least one radial lip seal against a liner **212** over a rotatable axle **214.** As shown, the sensor arrangement **202** is installed at an inclined angle to measure the wear of the at least one radial lip seal **204.** Moreover, the sensor arrangement **202** is installed in a cavity within a body part **216** and secured therein using screw nut mechanism, snap fit mechanism and the like.

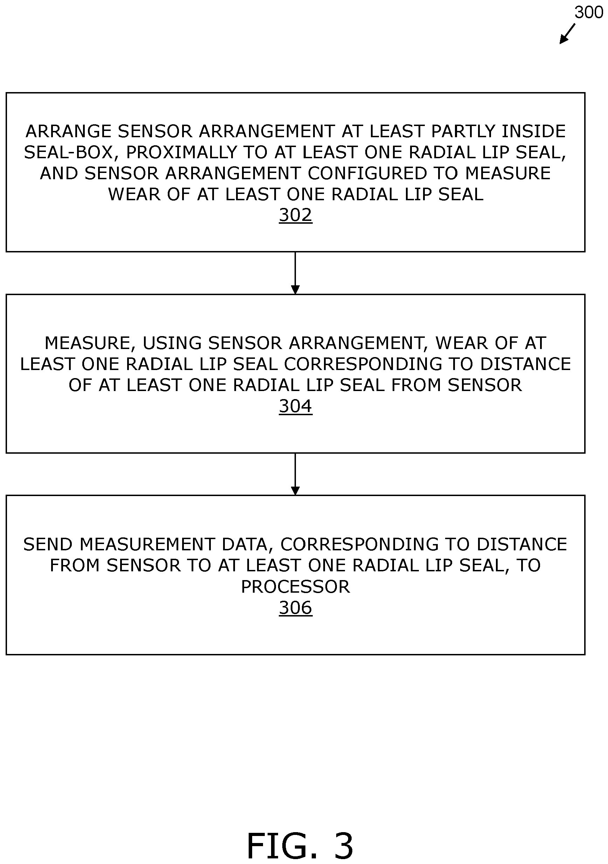

Referring to FIG. 3, illustrated a flowchart **300** of steps for measuring wear of at least one radial lip seal, in accordance with an embodiment of the present disclosure. At step **302,** a sensor arrangement is arranged at least partly inside a seal-box, proximally to the at least one radial lip seal, and the sensor arrangement configured to measure wear of the at least one radial lip seal. At step **304,** using the sensor arrangement, the wear of the at least one radial lip seal corresponding to a displacement of the at least one radial lip seal from the sensor arrangement is measured. At step **306,** a measurement data, corresponding to the displacement of the at least one radial lip seal, is send to a processor.

The steps **302, 304** and **306** are only illustrative and other alternatives can also be provided where one or more steps are added, one or more steps are removed, or one or more steps are provided in a different sequence without departing from the scope of the claims herein.

It might be, that according to the invention the wear is measured from more than one sealing, and the results can be compared, to get information about the axle or liner condition or the condition of one or more seals, for example.

The solution according to the invention might be used also for the measurement of such a seal which locates at the attachment point, from which attachment point the thruster (thruster housing) is connected the thruster system to a ship or a marine vessel, for example.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system for measuring wear of at least one radial lip seal (102, 204) arranged circumferentially over a rotatable axle (104, 214), the system comprising:
- the at least one radial lip seal having an inner diameter (106, 206), an outer diameter (108, 208); and
- a sensor arrangement (114, 202), attached at least partly inside a seal-box (116), arranged proximally to the at least one radial lip seal, and the sensor arrangement is configured to measure the wear of the at least one radial lip seal, by measuring with a sensor (118) of the sensor arrangement the distance between the sensor and the at least one radial lip seal,
wherein the wear of the at least one radial lip seal corresponds to the distance of the at least one radial lip seal from the sensor (118), wherein the distance is measured between the sensor (118) and the outer diameter (108, 208) of the at least one radial lip seal (102, 204), wherein the sensor arrangement is configured for dynamic measuring of the at least one radial lip seal and static measuring of the at least one radial lip seal and to predict the replacement of the at least one radial lip seal, wherein static measuring refers to the measurement performed by the sensor arrangement when the rotatable axle is stationary and dynamic measuring refers to the measurement performed by the sensor arrangement when the rotatable axle is rotating, and
wherein the sensor arrangement (114, 202) is further configured to measure at least one of: liner eccentricity, liner deformation, liner temperature, axle eccentricity, axle deformation, axle temperature, configuration of the axle, radial wear in axle bearings.

2. The system according to claim 1, wherein the system comprises a means (110, 210) fitted circumferentially over the at least one radial lip seal (102, 204), for tightening the at least one radial lip seal against the rotatable axle (104, 214) or a liner (112, 212) fitted around the circumference over the rotatable axle.

3. The system according to claim 1, wherein the means (110, 210) for tightening the at least one radial lip seal (102, 204) against the rotatable axle (104, 214) or the liner (112, 212) is a spring.

4. The system according to claim 1, wherein the at least one radial lip seal (102, 204) is arranged such that the inner diameter (106, 206) is arranged to contact the rotatable axle (104, 214) or the liner (112, 212).

5. The system according to claim 1, wherein the sensor (118) is selected from group of: an eddy current sensor, photoelectric proximity sensor, magnetic proximity sensor, ultrasonic sensor, IR proximity sensor and the like.

6. The system according to any preceding claim, wherein the seal box (116) has a pressurized oil and/or a pressure sensor therein.

7. A method for measuring wear of at least one radial lip seal (102, 204) arranged circumferentially over a rotatable axle (104, 214), the at least one radial lip seal having an inner diameter (106, 206) and an outer diameter (108, 208), the method comprising:
- arranging a sensor arrangement (114, 202) at least partly inside a seal-box, proximally to the at least one radial lip seal, and the sensor arrangement configured to measure wear of the at least one radial lip seal;
- measuring, using the sensor arrangement, the wear of the at least one radial lip seal corresponding to a distance of the at least one radial lip seal from the sensor arrangement, wherein the distance is measured between the sensor (118) and the outer diameter (108, 208) of the at least one radial lip seal (102, 204),
wherein the sensor arrangement is configured for dynamic measuring of the at least one radial lip seal and static measuring of the at least one radial lip seal and predicting the replacement of the at least one radial lip seal, wherein static measuring refers to the measurement performed by the sensor arrangement when the rotatable axle is stationary and dynamic measuring refers to the measurement performed by the sensor arrangement when the rotatable axle is rotating,
wherein the sensor arrangement (114, 202) is configured for measuring at least one of: liner eccentricity, liner deformation, liner temperature, axle eccentricity, axle deformation, axle temperature, configuration of the axle, radial wear in axle bearings; and
- sending a measurement data, corresponding to the distance of the at least one radial lip seal, to a processor.

8. The method according to claim 7, further comprising a means (110, 210) fitted circumferentially over the at least one radial lip seal (102, 204), for tightening the at least one radial lip seal against the rotatable axle (104, 214) or a liner (112, 212) fitted around the circumference over the rotatable axle.

9. The method according to claim 8, wherein the tightening of the at least one radial lip seal (102, 204) against the rotatable axle (104, 214) or the liner (112, 212) is a performed by a spring.

10. The method according to claim 7 to 9, further comprising calibrating the sensor arrangement (114, 202).

11. The method according to claim 7 to 10, further comprising compensation of the measurement data based on at least one of: temperature, pressure.

12. The method according to claim 7 to 11, wherein the method comprises arranging the at least one radial lip seal (102, 204) such that the inner diameter (106, 206) contacts the rotatable axle or the liner (112, 212).

13. The method according to claim 7 to 12, wherein the seal box (116) has a pressurized oil and/or a pressure sensor therein.

14. An azimuth type thruster of a marine vessel, the azimuth type thruster comprising at least one housing configured to hold:
- at least one rotatable axle (104, 214) having at least one radial lip seal (102, 204) according to any of the claim 1-6, wherein the at least one radial lip seal is arranged circumferentially over the at least one rotatable axle; and
- a sensor arrangement (114, 202), attached at least partly inside a seal-box (116), arranged proximally to the at least one radial lip seal, and the sensor arrangement is configured to measure wear of the at least one radial lip seal.

15. The azimuth type thruster according to claim 14, wherein the at least one rotatable axle (104, 214) having a first, a second, a third and a fourth radial lip seal arranged circumferentially thereon, and wherein the sensor arrangement (114, 202) is configured to measure the wear of the third radial lip seal when counted from that end of the at least one rotatable axle where a propeller is attached.
